# EUROPÄISCHE PATENTSCHRIFT

(11) **EP 2 934 865 B1**
(45) Veröffentlichungstag und Bekanntmachung des Hinweises auf die Patenterteilung: **19.08.2020**
(21) Anmeldenummer: 13831894.4
(22) Anmeldetag: 06.12.2013
(51) Int. Cl.: B29C 70/54, B29C 70/44

(54) **VORRICHTUNG UND VERFAHREN ZUR INFILTRATION EINER FASERPREFORM**
DEVICE AND METHOD FOR INFILTRATING A FIBER PREFORM
DISPOSITIF ET PROCÉDÉ D'IMPRÉGNATION D'UNE ÉBAUCHE DE FIBRES

(30) Priorität: 21.12.2012 DE 102012112939
(43) Veröffentlichungstag der Anmeldung: 28.10.2015
(73) Patentinhaber: Thyssenkrupp Federn und Stabilisatoren GmbH, 58119 Hagen (DE); thyssenkrupp AG, 45143 Essen (DE)
(72) Erfinder: HUFENBACH, Werner, 01324 Dresden (DE); LEPPER, Martin, 01279 Dresden (DE); WERNER, Jens, 01640 Coswig (DE); KÖHLER, Christian, 01099 Dresden (DE); BARTSCH, André, 01159 Dresden (DE)
(74) Vertreter: thyssenkrupp Intellectual Property GmbH
(86) Internationale Anmeldenummer: PCT/DE2013/100411
(87) Internationale Veröffentlichungsnummer: WO 2014/094733

(56) Entgegenhaltungen:
- WO-A1-2005/000566
- FR-A1- 2 828 130
- US-A- 5 904 803

## Beschreibung

Die Erfindung betrifft ein Verfahren und eine Vorrichtung zur Infiltration einer Faserpreform eines Bauteils aus Faserverbundwerkstoff mit einem Matrixmaterial.

Das Verfahren und die Vorrichtung zur Infiltration einer Faserpreform ist ein Bestandteil eines Verfahrens und einer Vorrichtung zur Herstellung eines Bauteils aus Faserverbundwerk-stoff aus dieser Faserpreform.

Verfahren und Vorrichtung zur Infiltration einer Faserpreform sind als Resin-Transfer-Moulding (RTM)-Verfahren bzw. Vorrichtung bekannt, wobei eine trockene Faserpreform in einem geschlossenen Formwerkzeug angeordnet wird und in eine Kavität des Werkzeugs das harzartige Matrixmaterial injiziert wird, um die Faserpreform mit Matrixmaterial zu tränken. Anschließend wird die Faserpreform mittels des Formwerkzeugs in die gewünschte Form gepresst und konsolidiert.

Bei einem zum RTM-Verfahren verwandten Harzinfusionsverfahren wird das Matrixmaterial durch ein Vakuum unterstützt in die Werkzeugkavität und damit die Faserpreform eingezogen.

Aus der Druckschrift WO 2005/000566 Al ist eine Vorrichtung wind ein Verfahren für eine derartige Infiltration eines flächigen Faserverbundwerkstoffes bekannt. Ein lokal über einen Einspritzeinlass in das flächige Faserverbund-Verstärkungsteil eingeleitetes Matrixmaterial breitet sich unter Beaufschlagung durch ein Vakuum längs im Querschnitt des Verstärkungsteils aus. Anschließend wird das infiltrierte flächige Faserverbundteil mittels eines Druckmediums in Richtung seiner Flächennormalen verdichtet.

Ein gleichartiges Infiltrations-Verfahren an einem vorgeformten Faserverbundteil ist aus der Druckschrift FR 2 828 130 A1 bekannt.

Bei besonders geformten und insbesondere längserstreckten Faserpreformen ist das Verfahren recht nachteilig, da das Matrixmaterial die-Faserpreform in Längsrichtung über deren gesamte Länge passieren muss, um die gesamte Preform mit Matrixmaterial zu tränken. Der Infiltrationsprozess ist dadurch sehr langwierig. Aufgrund der langen Infiltrationszeiten ist dieses Verfahren für lang erstreckte Faserpreformen nicht geeignet.

Faserpreformen mit besonderen Formen, die im Resin-Transfer-Moulding (RTM)-Verfahren infiltriert und geformt werden, benötigen zudem kostenintensive Formwerkzeuge. Die Verschmutzung der Formwerkzeuge durch das flüssige Harzsystem verhindert einen reibungslosen, kontinuierlichen Fertigungsprozess.

Aus der Druckschrift DE 101.57 655 A1 ist ein Verfahren und eine Vorrichtung zur Herstellung von Bauteilen aus Faserverbundwerkstoffen bekannt, bei dem eine vorgeformt vorliegende Faserpreform über einen einstellbaren Spalt im Harzinfusions-verfahren imprägniert wird. Dazu wird die Faserpreform von cm 15 mindestens zwei äußeren, beweglichen Werkzeugteilen dicht umschlossen. Die Werkzeugteile werden unter Bildung von Spalten zur Faserpreform auseinander bewegt. Unter evakuiertem Zustand der Kavität der Werkzeugteile wird das Imprägnierharz in die Spalten zugeführt und anschließend die Werkzeugteile wieder 20 aufeinander zubewegt, um die Faserpreform zu imprägnieren und das überschüssige Imprägnierharz aus den Spalten auszutreiben.

Hierdurch können zwar die Infiltrationszeiten verringert werden, allerdings ist es nachteilig, dass zum Zweck der Ausbildung eines definierten geometrischen Spaltes die Werkzeugteile in technisch und konstruktiv aufwendiger Weise die Bauteilgeo-metrie der Faserpreform abbilden müssen und sich daher aus ökonomischer Sicht dieses Spaltimprägnier-Verfahren im Wesentlichen nur für großflächige, plattenförmig ausgebildete Pre-formen eignet. Außerdem sind für die Einstellung des Spaltes aufwändige Stellelemente zum Betrieb der äußeren Werkzeugteile notwendig.
Faserpreformen für 'Bauteile mit besonderen Formen, wie zum Beispiel für die Herstellung von Federn, werden daher meist auf herkömmliche Weise bereits vor dem Aufbringen auf ein Formwerkzeug mit dem Matrixmaterial getränkt, was allerdings ein erschwertes Handling im nachfolgenden Formüngsprozess mit sich bringt. Die getränkten Faserpreformen können z.B. wegen des nassen, zur Tropfenbildung neigenden Zustands kaum zwischengelagert werden und erzeugen eine erhebliche Verschmutzung an den Form-und Konsolidierwerkzeugen.

Der Erfindung liegt die Aufgabe zugrunde, das Verfahren und die Vorrichtung zur Infiltration von Faserperformen der vorgenannten Art zu verbessern, insbesondere ein Verfahren und eine Vorrichtung zu schaffen, welche(s) die Infiltration geformter Faserpreformen mit geringem technischen und konstruktiven Aufwand unter Gewährleistung niedriger Infiltrationszeiten ermöglicht.

Die Aufgabe wird erfindungsgemäß durch ein Verfahren mit den Merkmalen des Patentanspruches 1 gelöst.

Erfindungsgemäß wird vorgeschlagen, dass
- auf die Faserpreform ein elastischer Oberzug aufgebracht wird,
- der elastische Überzug unter Bildung eines Spaltraums zwischen der Faserpreform und dem Überzug mittels mit dem elastischen Überzug in Wirkverbindung stehender Mittel aufgeweitet wird
- das Matrixmaterial in den Spaltraum zugeführt wird und
- anschließend der elastische Überzug an die Faserpreform angepresst wird.

Das Verfahren nutzt erfindungsgemäß einen elastischen Überzug als flexibles Werkzeug zur Infiltration. Der Überzug wird auf oder um die Faserpreform angeordnet, wobei der Überzug die Faserpreform umschießt. Unter-Bildung eines Spaltraums zwischen der Faserpreform und dem Überzug wird dieser aufgeweitet. Das kann durch das flüssige Matrixmaterial selbst geschehen, indem dieses mit einem Förderdruck der Fördereinrichtung des Matrixmaterials zwischen die Faserpreform und dem lose an der Faserpreform anliegenden elastischen Überzug eingeführt. wird, wobei der Überzug geweitet und ein Spaltraum zwischen der Faserpreform und dem geweiteten Überzug, gebildet wird. Die Weitung des Überzuges und Bildung des Spaltraumes kann jedoch auch unabhängig vom Matrixmaterial durch ein anderes, direkt auf den Überzug einwirkendes Hilfsmittel erfolgen, das z.B. elektrischer, pneumatischer oder hydraulischer Art sein kann. Durch die Zuführung des flüssigen Matrixmaterials in den gebildeten Spaltraum wird das Matrixmaterial sehr schnell auf der Oberfläche der Faserpreform verteilt und benetzt diese umfänglich.

Anschließend wird der elastische Überzug an die Faserpreform angepresst, was z.B. durch Aufbringen eines negativen Förderdrucks der Fördereinrichtung des Matrixmaterials geschehen kann, so dass der Überzug gleichmäßig an die Bauteilgeometrie der Faserpreform angesaugt wird.

Das Anpressen des Überzugs an die Bauteilgeometrie der Faserpreform kann auch mit einem anderen, auf den Überzug einwirkenden Hilfsmittel, z.B. elektrischer, pneumatischer oder hydraulischer Art, erfolgen, bei dem der Überzug der Faserpreform ebenfalls. gleichmäßig an die Bauteilgeometrie der Faserpreform angepresst wird.

Durch das gleichmäßige Anpressen des flexiblen Überzuges an .25 die Bauteilgeometrie der Faserpreform wird das Matrixmaterial auf kürzestem Weg in Richtung der Oberflächennormalen in die Mitte der Faserpreform infiltriert.

Speziell auf die Bauteilgeometrie abgestimmte äußere Werkzeugteile sind bei dem erfindungsgemäßen Verfahren nicht erforderlich. Das Matrixmaterial befindet sich innerhalb des Raumes zwischen dem Überzugs und der Faserpreform und kommt mit der Umgebung und eventuellen Hilfsmitteln nicht in Berührung.

Flüssiges Matrixmaterial kann somit keine Verschmutzungen hervorrufen.

Die Faserpreformen sind nach der Infiltration - geschützt durch den Überzug - für eine Weiterverarbeitung leicht handhabbar und lagerfähig.

Damit ist ein sauberes, aufwandsminimiertes und schnellwirken des Infiltrationsverfahren für die Tränkung von Preformen, insbesondere für die Tränkung von Preformen mit besonderen Geometrien, wie z. B. Profilstangen- oder Spiralgeometrien, bereitgestellt. Das Infiltrationsverfahren ist für die Infiltration jeglicher vorgeformter Faserpreformen wirtschaftlich anwendbar.

Vorteilhafte Ausgestaltungen und Weiterbildungen des erfindungsgemäßen Verfahrens gehen aus den abhängigen Patentansprüchen 2 bis 11, der nachfolgenden Beschreibung und den zugehörigen Zeichnungen hervor.

Vorteilhafter Weise wird ein schlauchförmiger, elastischer Überzug verwendet, der die Faserpreform vollumfänglich umgibt. Durch das gleichmäßige und umfängliche Anpressen des flexiblen Schlauches an die Bauteilgeometrie der Faserpreform wird das Matrixmaterial auf kürzestem Weg und radial umfänglich in Richtung der Oberflächennormalen in die Mitte der Faserpreform infiltriert. Das beschleunigt die Infiltration der Faserpreform aufs Weitere. Das Verfahren unter Verwendung eines Schlauches vereinfacht außerdem die Dichtungsmaßnahmen und verringert Angriffsstellen mit Verschmutzungsgefährdung.

Zur Ausführung des erfindungsgemäßen Verfahrens mit einem Schlauch als Überzug wird dieser zunächst auf die Faserpreform aufgebracht. Das geschieht nach einer bevorzugten Ausgestaltung derart, dass der elastische Schlauch auf einen hohlprofilartigen Hilfskörper aufgezogen wird, die Faserpreform in einen lichten Querschnitt des Hilfskörpers eingeführt wird, ein Schlauchende an der Faserpreform fixiert wird und der Hilfskörper zwischen der Faserpreform und dem Schlauch herausgezogen wird. Somit kann die Faserpreform auf einfache, unkomplizierte Weise mit dem elastischen Schlauch umgeben werden, zumal der auf die Faserpreform aufgezogene Schlauch selbst zum Zwecke des erfindungsgemäßen Infiltrationsverfahrens keine Spannkraft auf die Faserpreform ausüben muss und nur lose und nicht konturenbündig an der Bauteilgeometrie anzuliegen braucht.

Vorzugsweise wird zwischen der Faserpreform und dem Überzug ein inneres, druckdicht geschlossenes System erzeugt. Mittels dieses inneren, druckdichten Systems kann beim Einströmen des Matrixmaterials ein bestimmter Druck in dem Bereich zwischen Überzug und Faserpreform erzeugt werden, der dessen gleichmäßige Aufweitung zur Bildung eines Spaltraums ermöglicht. So kann der Zufluss des Matrixmaterials beispielsweise durch die Einstellung eines geringeren Druckes im Spaltraum gegenüber dem Druck des einströmenden' Matrixmaterials beschleunigt werden.

Besonders vorteilhaft ist es in diesem Zusammenhang, wenn vor der Zuführung von Matrixmaterial in den Spaltraum die Faserpreform mittels des inneren druckdichten Systems evakuiert wird. Damit können unerwünschte Lufteinschlüsse aus der Faserpreform entfernt werden, die bei der Zuströmung des Matrixmaterials in den Spaltraum und bei der nachfolgenden Tränkung der Faserpreform hinderlich sind. Die Geschwindigkeit und die Qualität der Tränkung werden dadurch verbessert.

Gemäß einer weiteren vorteilhaften Ausgestaltung der Erfindung ist vorgesehen, dass zwischen einer Druckkammer, welche die den Überzug aufweisende Faserpreform aufnimmt, und dem Überzug ein äußeres, druckdicht geschlossenes System erzeugt wird.

Mittels dieses äußeren, druckdichten Systems kann ein bestimmter Druck in der Druckkammer und damit in der äußeren Umgebung des Überzuges eingestellt werden, mit dem u. a. die Aufweitung des Überzuges beeinflusst und die Bildung des Spaltraumes reguliert werden kann. Im Folgenden kann der Zufluss des in den Spaltraum einströmenden flüssigen Matrixmaterials beeinflusst werden. Als Druckmedium der Druckkammer ist neben Luft vorzugsweise Öl oder Wasser geeignet. Öl oder Wasser als nahezu inkompressible Druckmedien des äußeren, druckdichten Systems mindern die Trägheit der Regelung zur Bildung des Spaltraums.

Vorzugsweise wird der Spaltraum zwischen der Faserpreform und der Überzug derart gebildet, dass ein Überdruck im inneren, druckdicht geschlossenen System gegenüber dem Druck im äußeren druckdichten System eingestellt wird. Dadurch wird die Aufweitung des Überzuges unterstützt und insbesondere eine widerstandsarme und schnelle Zuführung des flüssigen Matrixmaterials in den gebildeten Spaltraum ermöglicht.

Nach einer weiteren bevorzugten Ausgestaltung wird der elastische Überzug dadurch an die Faserpreform angepresst, dass ein Überdruck des Druckmediums im äußeren, druckdicht geschlossenen System gegenüber dem Druck im inneren; druckdicht geschlossenen System eingestellt wird. Die Druckverhältnisse führen zu einer umfassenden Verengung des flexiblen Überzuges und zum gleichmäßigen Anpressen des Überzuges an die Bauteil-geometrie der Faserpreform mit der vorstehend beschriebenen vorteilhaften Tränkungswirkung.

Eine besonders vorteilhafte Ausgestaltung des erfindungsgemäßen Verfahrens sieht vor, dass die den Überzug aufweisende, vorzugsweise mit dem Schlauch ummantelte Faserpreform vor dem Aufweiten des Überzuges auf einem Formwerkzeug angeordnet wird. Die erfindungsgemäße, saubere Infiltration der Faserpreform kann mithin direkt auf dem Formkern zur Umformung der Faserpreform erfolgen, womit die Verfahrensschritte der Tränkung und der Formgebung unter Nutzung der erfindungsgemäßen Vorzüge vereint werden, was zu einer erheblichen Prozessoptimierung führt.

Bei einer weiteren vorteilhaften Ausgestaltung des erfindungsgemäßen Verfahrens wird die Faserpreform vor dem Aufbringen des elastischen Überzuges, vorzugsweise vor dem Aufbringen des Schlauches, auf einem Formwerkzeug angeordnet. Auch bei dieser Ausgestaltung werden die Verfahrensschritte der Tränkung und der Formgebung vorteilhaft vereint.

In einer vorteilhaften Weiterbildung der vorbeschriebenen Ausgestaltung wird der an das Formwerkzeug anschließende Überzug druckdicht mit dem Formwerkzeug verbunden. Damit kann das Formwerkzeug zugleich als Begrenzung des flexiblen Werkzeugs ggf. auch als Begrenzung der Druckkammer dienen. Auf einen das Formwerkzeug vollständig umfangener Überzug kann unter Materialeinsparung verzichtet werden. Außerdem braucht der an das Formwerkzeug anschließende Überzug zum Aufbringen auf die Faserpreform nicht aufgeweitet zu werden.

Die Aufgabe wird außerdem durch eine Vorrichtung mit den Merkmalen des Patentanspruches 12 gelöst.

Erfindungsgemäß wird vorgeschlagen, dass auf der Faserpreform ein elastischer Überzug angeordnet ist und mit dem elastischen Überzug in Wirkverbindung stehende Mittel vorgesehen sind, mittels welcher der Überzug unter Bildung eines Spaltraums zwischen der Faserpreform und dem Überzug aufweitbar ist, ein Matrixmaterial in den Spaltraum zuführbar ist und der Überzug an die Faserpreform anpressbar ist.

Diese Vorrichtung nutzt im Gegensatz zum bekannten aufwendigen Spalt-Imprägniärverfahren einen flexiblen Überzug als Hilfsmittel zur Erzeugung eines Spaltraumes und zum Infiltrieren des Matrixmaterials aus dem Spaltraum in die Faserpreform.

Das Matrixmaterial kann mittels des flexiblen Überzuges schnell in den Spaltraum einströmen und auf kürzestem Weg in Richtung der Oberflächennormalen in die Mitte der Faserpreform infiltriert werden.

Die dazu mit dem elastischen Überzug in Wirkverbindung stehenden Mittel sind konstruktiv einfach gestaltbar.

Die Vorrichtung bedarf keiner speziell auf die Bauteilgeometrie abgestimmter Werkzeugteile. Das Matrixmaterial bleibt innerhalb des Überzugs und kommt mit Teilen dieser Vorrichtung oder mit Vorrichtungen der nachfolgenden Bearbeitungsschritte nicht in Kontakt.

Damit ist eine Vorrichtung für die Durchführung eines sauberen, aufwandsminimierten und schnellwirkenden Infiltrationsverfahrens zur Tränkung von Preformen, insbesondere für die Tränkung von Preformen mit besonderen Geometrien, wie z. B. Profilstangen- oder Spiralgeometrien, bereitgestellt.

Vorteilhafte Ausgestaltungen und Weiterbildungen der erfindungsgemäßen Vorrichtung gehen aus den abhängigen Patentansprüchen 12 bis 22, der nachfolgenden Beschreibung und den zugehörigen Zeichnungen hervor.

Eine vorteilhafte Aufnahmeeinrichtung der erfindungsgemäßen Vorrichtung dient dem Aufbringen eines schlauchförmigen, elastischen Überzuges auf die Faserpreform, so dass die Faserpreform (1, 23, 37) unmittelbar in dem elastischen Schlauch (3) angeordnet ist. Der Schlauch dient vorteilhaft als ein die Faserpreform vollumfassendes Hilfsmittel der Infiltration und Formgebung.

Diese und weitere aus den Patentansprüchen, der Beschreibung der Ausführungsbeispiele und den Zeichnungen hervorgehenden Merkmale können jeweils für sich oder in Kombination als vorteilhafte Ausführungsformen der Erfindung verwirklicht sein, für die hier Schutz beansprucht wird.

Nachfolgend wird in drei Ausführungsbeispielen das erfindungs-30 gemäße Verfahren und die zugehörigen Vorrichtungen zur Filtration einer jeweiligen Faserpreform für die Herstellung einer Welle, einer Feder und eines Omega-Profilkörpers aus Faserverbundwerkstoff näher erläutert. Die zugehörigen Zeichnungen zeigen schematisch in
- Fig. 1: eine Schnittansicht einer Aufnahmeeinrichtung zum Aufbringen eines elastischen, schlauchförmigen Überzugs auf eine rundstangenförmige Faserpreform für die Herstellung einer Welle,
- Fig. 2: eine Schnittansicht der Aufnahmeeinrichtung in einer zweiten Aufbringphase,
- Fig. 3: eine Schnittansicht der schlauchummantelten, rundstangenförmigen Faserpreform mit einem angussseitigen und einem steigerseitigen Anschlussstutzen,
- Fig. 4: eine Schnittansicht einer Anordnung der schlauchummantelten, rundstangenförmigen Faserpreform nach Fig. 3 in einer Druckkammer während einer ersten Infiltrationsphase,
- Fig. 5: eine Schnittansicht der Anordnung nach Fig. 4 während einer zweiten Infiltrationsphase,
- Fig. 6: eine Detailansicht A der Anordnung während der zweiten Infiltrationsphase nach Fig. 5,
- Fig. 7: eine Querschnittsansicht der rundstangenförmiges Faserpreform während der zweiten Infiltrationsphase nach Fig. 5,
- Fig. 8: eine Schnittansicht der Anordnung nach Fig. 4 während einer dritten Infiltrationsphase,
- Fig. 9: eine Querschnittsansicht der rundstangenförmigen Faserpreform während der dritten Infiltrationgphase nach Fig. 8,
- Fig. 10: eine Schnittansicht der Anordnung während der Entnahme der schlauchummantelten rundstangenförmigen Faserpreform nach der Infiltration aus der Druckkammer,
- Fig 11: eine Schnittansicht einer schlauchummantelten, rund-strangförmigen Faserpreform für die Herstellung einer Feder mit angussseitigem und steigerseitigem Anschlussstutzen,
- Fig. 12: eine Seitenansicht der um einen Formkern gewickelten schlauchummantelten, rundstrangförmigen Faserpreform,
- Fig. 13: eine Schnittansicht einer Anordnung des nach Fig. 12 belegten Formkerns in einer Druckkammer während einer ersten Infiltrationsphase,
- Fig. 14: eine Schnittansicht der Anordnung nach Fig. 13. während einer zweiten Infiltrationsphase,
- Fig. 15: eine Längsschnittansicht durch den belegten Formkern während der zweiten Infiltrationsphase nach Fig. 14,
- Fig. 16: eine. Detailansicht B des belegten Formkerns während der zweiten Infiltrationsphase nach Fig. 14,
- Fig. 17: eine Schnittansicht der Anordnung nach Fig. 13 während einer dritten Infiltrationsphase,
- Fig. 18: eine Längsschnittansicht durch den belegten Formkern während der dritten Infiltrationsphase nach Fig. 17,
- Fig. 19: eine Detailansicht C des belegten Formkerns während der dritten Infiltrationsphase nach Fig. 17,
- Fig. 20: eine Schnittansicht einer Anordnung einer mit einem elastischen, schlauchförmigen Überzug ummantelten Faserpreform-Formkern-Einheit in einem Druckbehälter während einer ersten Infiltrationsphase zur Herstellung eines Omega-Profilkörpers,
- Fig. 21: eine Schnittansicht der Anordnung nach Fig. 20 während einer zweiten Infiltrationsphase,
- Fig. 22: eine Querschnittsansicht der Faserpreform-Formkern-Einheit während der zweiten Infiltrationsphase nach Fig. 21,
- Fig. 23: eine Schnittansicht der Anordnung nach Fig. 20 während einer dritten Infiltrationsphase,
- Fig. 24: eine Querschnittsansicht der Faserpreform-Formkern-Einheit während der dritten Infiltrationsphase nach Fig. 23,
- Fig. 25: eine Schnittansicht einer Anordnung der mit einem elastischen, flächigem Überzug belegten Faserpreform-Formkern-Einheit im Druckbehälter während einer ersten Infiltrationsphase zur Herstellung eines Omega-Profilkörpers,
- Fig. 26: eine Schnittansicht der Anordnung nach Fig. 25 während einer zweiten Infiltrationsphase,
- Fig. 27: eine Querschnittsansicht der Faserpreform-Formkern-Einheit während der zweiten Infiltrationsphase nach Fig. 26,
- Fig. 28: eine Schnittansicht der Anordnung nach Fig. 25 während einer dritten Infiltrationsphase und
- Fig. 29: eine Querschnittsansicht der Faserpreform-Formkern-Einheit während der dritten Infiltrationsphase nach Fig. 28.

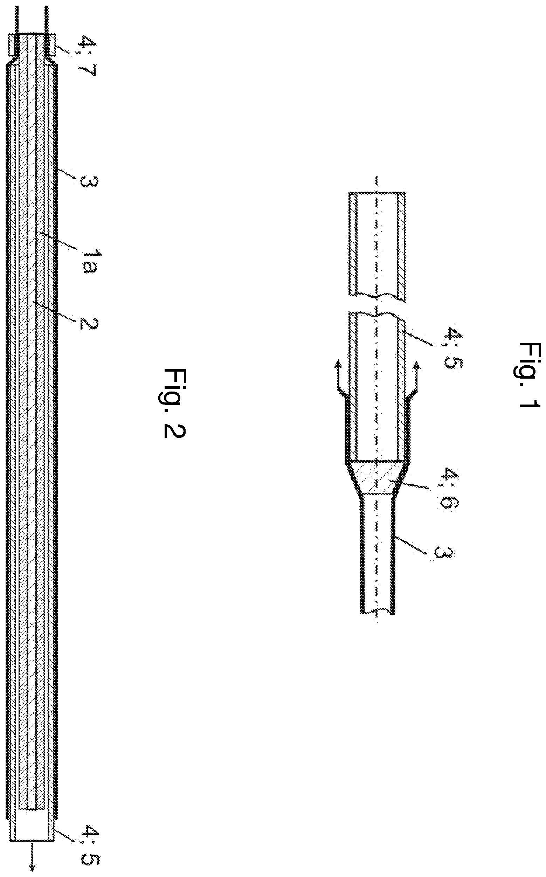

Das erste Ausführungsbeispiel gemäß der Figuren 1 bis 10 be-25 schreibt das erfindungsgemäße Verfahren und die zugehörigen Vorrichtungen zur. Filtration einer rundstangenförmigen Faserpreform 1 für die Herstellung einer Welle.

Zur Herstellung der rundstangenförmigen Faserpreform 1 werden Fasern nach einem bekannten, hier nicht näher dargestellten 30 Verfahren auf ein formstabiles Kernelement 2 mit rundem Querschnitt aufgebracht. Danach wird ein schlauchförmiger, elastischer Überzug, weiter bezeichnet als elastischer Schlauch 3, aus beispielsweise Silikon auf die rundstangenförmige Faserpreform 1 aufgebracht.

In Fig. 1 ist eine Aufnahmeeinrichtung 4 zum Aufbringen des elastischen Schlauches 3 auf die rundstangenförmige Faserpreform 1 dargestellt. Die Aufnahmeeinrichtung 4 weist einen rohrförmigen Hilfskörper 5 und einen Aufnahmekonus 6 auf. In einer ersten Phase des Aufbringens wird der elastische Schlauch 3 mit Hilfe des Aufnahmekonus 6 auf den rohrförmigen Hilfskörper 5 'gezogen, so dass dieser den Hilfskörper 5 vollständig überdeckt.

In einer zweiten Phase des Aufbringens nach Fig. 2 wird die Faserpreform 1 in den rohrförmigen Hilfskörper 5 eingeführt. Der Hilfskörper 5 hat eine ausreichende Länge und einen so großen lichten Querschnitt, dass die Faserpreform 1 leicht und vollständig in dem Hilfskörper 5 platziert werden kann. Der Schlauch 3 wird einen Endes mittels einer Schlauchschelle 7 an der Faserpreform 1 fixiert und der Hilfskörper 5 in Relativverschiebung zum Schlauch 3 und zur Faserpreform 1 herausgezogen, wobei sich der Schlauch 3 auf die Faserpreform 1 ablegt.

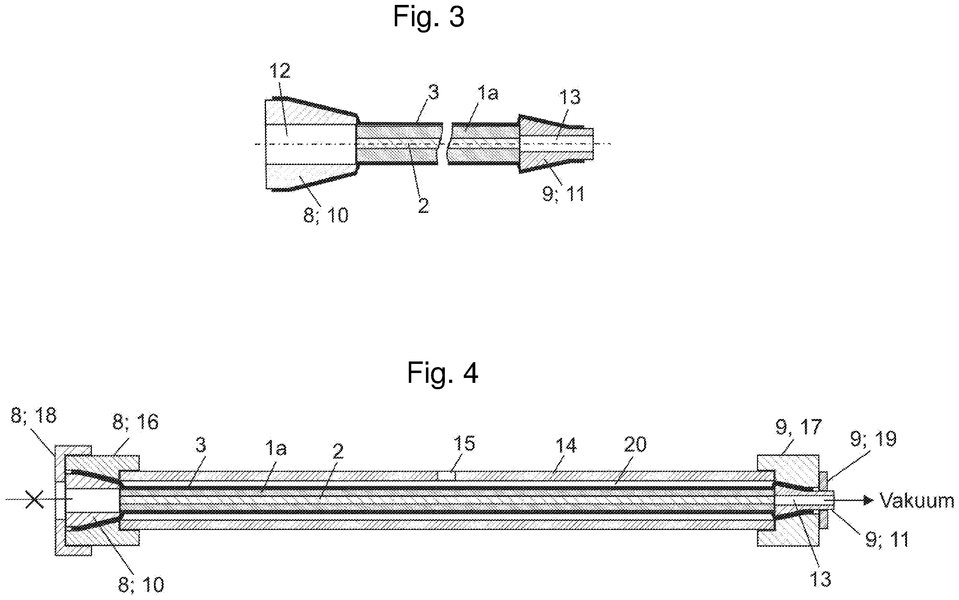

Beide Enden des Schlauches 3 werden nach Fig. 3 auf jeweils ein konisches Unterteil 10, 11 eines dreiteiligen Anschlussstutzens 8, 9 aufgezogen, so dass die konischen Unterteile 10, 11 der Anschlussstutzen 8, 9 in den Schlauch 3 münden und an je einem Ende an die Faserpreform 1 anschließen. Die Unterteile 10, 11 der Anschlussstutzen verfügen jeweils über eine zentrisch angeordnete, absperrbare Leitung, die die Anguss- 12 bzw. Steigerleitung 13 bildet.

Anschließend wird die so bestückte, schlauchummantelte Faserpreform 1, 3 gemäß Fig. 4 in eine rohrförmige Druckkammer 14 eingeführt. Die rohrförmige Druckkammer 14 weist in etwa in der Mitte ihrer Längserstreckung eine absperrbare Öffnung 15 auf.

Die konischen Unterteile 10, 11 der Anschlussstutzen 8, 9 werden an korrespondierende konische Oberteile 16, 17 der Anschlussstutzen 8, 9 angeschlossen, die wiederum dicht mit der rohrförmigen Druckkammer 14 verbunden sind. Die konischen Oberteile 16, 17 können mit einer dichtenden Verbindung oder fest mit der Druckkammer 14 verbunden sein. Mittels jeweils eines Verspannteils 18, 19 der Anschlussstutzen 8, 9 werden die Schlauchenden zwischen dem konischen Unterteil 10, 11 und dem konischen Oberteil 16, 17 der Anschlussstutzen 8, 9 dicht verspannt.

Die schlauchummantelte Faserpreform 1, 3 ist damit druckdicht gegenüber der rohrförmigen Druckkammer 14 angeordnet. Der Druckraum 20 in der Druckkammer 14 enthält ein beliebiges Druckmedium, wie hier z.B. Luft. Die absperrbare Öffnung 15 der Druckkammer 14 ist entsprechend der Verfahrensphase offen, geschlossen oder mittels einer nicht dargestellten Pumpe mit einem bestimmten Druck beaufschlagt, wodurch ein äußeres, druckdicht geschlossenes System zwischen dem Schlauch 3 der schlauchummantelten Faserpreform 1, 3 und der Druckkammer 14 geschaffen wird.

Fig. 4 zeigt die Anordnung der schlauchummantelten, rundstangenförmigen Faserpreform 1 in der Druckkammer 14 während einer ersten Infiltrationsphase, bei der die Faserpreform levakuiert wird. Dazu wird die Angussleitung 12 abgesperrt und an der Steigerleitung 13 eine nicht dargestellte Vakuumpumpe angeschlossen und betrieben, wodurch zwischen der Faserpreform 1 und dem Schlauch 3 ein inneres, druckdicht geschlossenes System geschaffen ist, in dem ein Vakuum erzeugt wird.

Die Öffnung der Druckkammer 1.4 ist während diese Verfahrensschritts gegenüber der Umgebung offen, so dass in der Druckkammer 14 der Umgebungsdruck herrscht.

Somit stellt sich ein Unterdruck im inneren, druckdicht geschlossenen System gegenüber der Druckkammer 14 bzw. der Umgebung ein bzw. ein Überdruck in der Druckkammer 14 gegenüber dem Druck im inneren, druckdicht geschlossenen System ein.

Bei der Evakuierung des inneren, druckdicht geschlossenen Systems wird der Schlauch 3 an die rundstangenförmige Faserpreform 1 angesogen und sämtliche Lufteinschlüsse aus der permeablen Struktur der Faserpreform 1 entfernt.

Zur Unterstützung der Evakuierung kann die Druckkammer 14 über die Öffnung 15 zusätzlich mit einem bestimmten höheren Druck als dem Umgebungsdruck beaufschlagt werden, so dass sich die Druckdifferenz zwischen dem äußeren, druckdicht geschlossenen System und dem inneren, druckdicht geschlossenen System erhöht. Damit beschleunigt sich der Evakuierungsprozess.

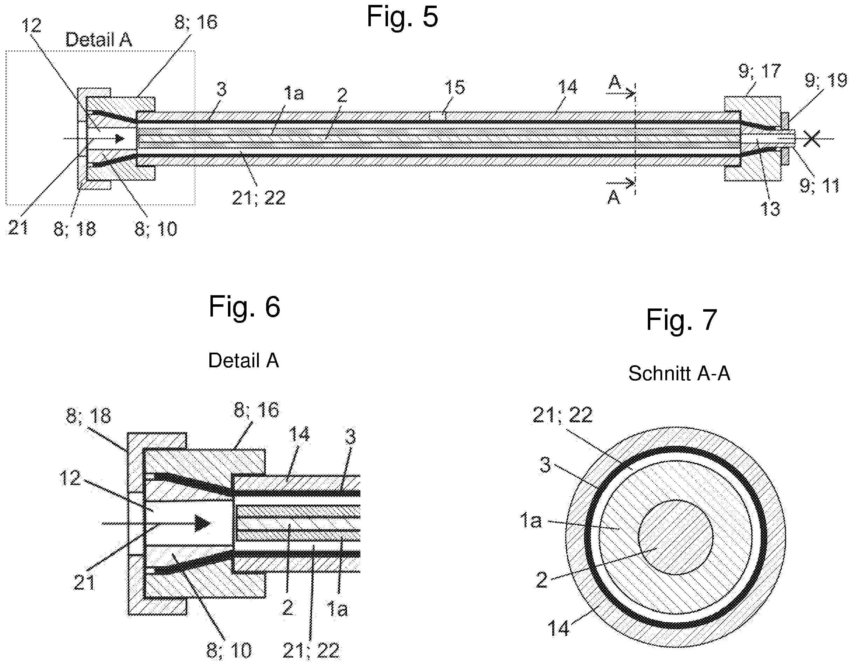

In einer nächsten Infiltrationsphase nach Fig. 5 wird die Steigerleitung 13 verschlossen und-über die Angussleitung 12 flüssiges Matrixmaterial 21, wie zum Beispiel ein flüssiges Harzsystem mit Überdruck gegenüber dem Vakuum und dem Druck in der Druckkammer in das innere, druckdichte System zwischen Schlauch 3 und Faserpreform 1 geleitet. Fig..6 zeigt die Angussseite 12 der. Vorrichtung nach Fig. 5 mit dem angussseitigen Anschlussstutzen 8 in einer vergrößerten Detailschnittansicht A. Die Anschlussleitung 12 des Unterteils 10 des Anschlussstutzens 8 weist einen größeren Durchmesser als der Außendurchmesser der Faserpreform 1 auf, so dass ein Ringspalt zwischen der Angussleitung 12 und der Faserpreform 1 gebildet ist, durch den das Matrixmaterial 21 zwischen den Schlauch 3 und der Faserpreform 1 einströmen kann.

Die Öffnung 15 der Druckkammer 14 ist während dieses Verfahrensschritts gegenüber der Umgebung offen, so dass in der Druckkammer 14'der Umgebungsdruck herrscht und sich durch das druckbeaufschlagte, einströmende Matrixmaterial 21 ein Überdruck im inneren, druckdicht geschlossenen System gegenüber dem Druck im äußeren druckdichten System einstellt. Dadurch wird der Schlauch 3 in radialer Richtung aufgeweitet, wobei konzentrisch um die rundstangenförmige Faserpreform 1 ein längserstreckter ringförmiger Spaltraum 22 entsteht, der sich sehr schnell und über die gesamte Länge der Faserpreform 1 mit Matrixmaterial 21 füllt. Der gebildete Spaltraum 22 ist gut ersichtlich aus der Ansicht in Fig. 7, die einen Querschnitt A-A durch die Vorrichtung nach Fig. 5 abbildet.

Zur Unterstützung der Spaltraumbildung kann die Druckkammer 14 über die Öffnung 15 zusätzlich mit einem Unterdruck gegenüber dem Umgebungsdruck beaufschlagt werden, so dass sich die Druckdifferenz zwischen dem äußeren, druckdicht geschlossenen System und dem inneren, druckdicht geschlossenen System erhöht. Der Prozess des Einfließens des Matrixmaterials 21 in den Spaltraum wird dadurch beschleunigt.

Die Weitung des Schlauches 3 und damit die Größe des Spaltraumes 22 kann über die eingestellte Druckdifferenz zwischen dem Druck in der Druckkammer 14 des äußeren, druckdicht geschlossenen System und dem Druck des Matrixmaterials 21 im Spaltraum 22 des inneren, druckdicht geschlossenen System reguliert werden.

Der Schlauch 3 kann maximal so geweitet werden, dass dieser an der Innenwand der rohrförmigen Druckkammer 14 anliegt, wie in 25 Fig. 5 gezeigt ist. Die Druckkammer 14 gibt somit die maximale Größe des längserstreckten ringförmigen Spaltraums 22 vor.

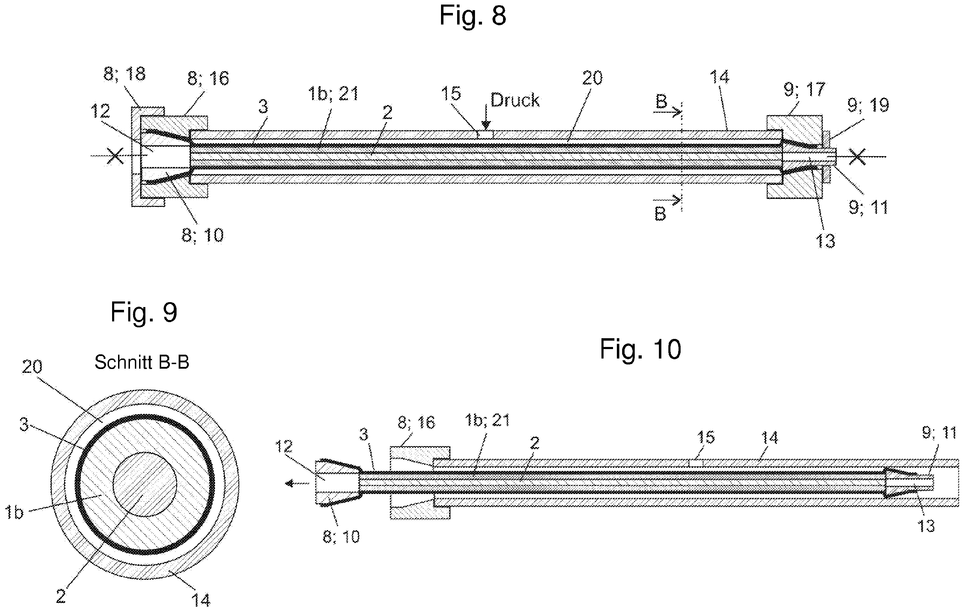

In einer dritten Infiltrationsphase nach Fig. 8 werden die Angussleitung 12 und die Steigerleitung 13 geschlossen. Die Druckkammer 14 wird nun über die Öffnung 15 mit einem Druck beaufschlagt, der größer als der Druck im Spaltraum 22 ist. Das führt zu einer radial gerichteten Verengung des Schlauches 3, wie aus der Querschnittsdarstellung in Fig. 9 (Schnitt B-B) der schlauchummantelten Faserpreform 1, 3 der Vorrichtung nach Fig.8 ersichtlich ist. Der Schlauch 3 wird vollflächig an den Umfang und die Länge der Faserpreform 1 angepresst, wobei die' Faserpreform 1 gleichmäßig radial zu ihrer Mittelachse gerichtet mit Matrixmaterial 21 getränkt wird. Die Infiltration des flüssigen Matrixmaterials 21 erfolgt auf kürzestem Wege sehr schnell in die Faserpreform 1 und ist damit sehr intensiv und effizient.

Fig. 10 zeigt, wie die getränkte, schlauchummantelte Faserpreform 1, 3 nach der Infiltration aus der rohrförmigen Druckkammer 14 entnommen wird. Dazu sind inneres und äußeres Drucksystem drucklos zu machen und die Anschlussstutzen 8, 9 zu lösen. Anschließend erfolgt in einer nicht dargestellten Nachbehandlungseinrichtung, wie zum Beispiel in einem Wärmeofen, die Konsolidierung der Faserpreform 1 und damit die Fertigstellung 15 der Welle aus Faserverbundmaterial.

Die rohrförmige Druckkammer 14 hat während der Infiltration keinerlei Kontakt zum flüssigen Harzsystem und steht im sauberen Zustand unmittelbar für den folgenden Infiltrationsvorgang zur Verfügung. Ebenso wird auch die nachfolgende Nachbehandlungseinrichtung nicht durch das flüssige Harzsystem verschmutzt.
Der Schlauch 3 als flexibles Werkzeug und Hilfsmittel zur Durchführung des Infiltrationsverfahrens kann entsprechend dem Anwendungsfall als Schutzhülle auf der fertiggestellten Welle verbleiben oder aber auch entfernt werden.

Je nach Anwendungsfall kann auch das Kernelement entfernt werden, so dass eine Hohlwelle aus Faserverbundmaterial entsteht.

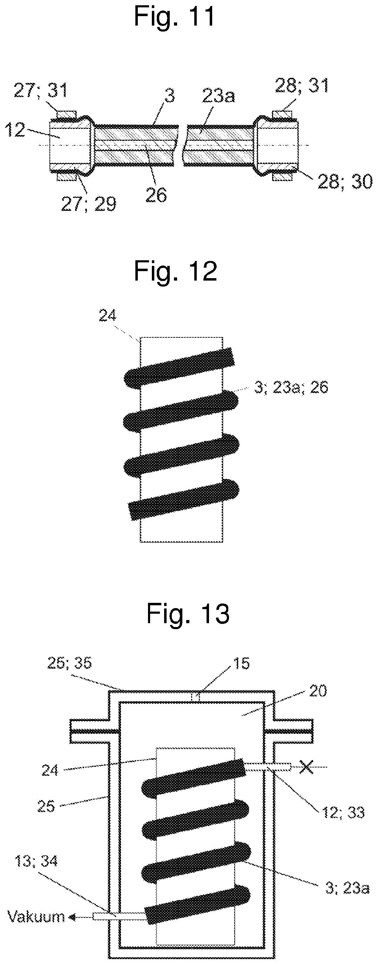

Das zweite Ausführungsbeispiel gemäß der Figuren 11 bis 19 beschreibt das erfindungsgemäße Verfahren und die zugehörigen Vorrichtungen zur Infiltration einer rundstrangförmigen Faserpreform 23 für die Herstellung einer Feder.

Das Verfahren und die Vorrichtungen nach dem zweiten Ausführungsbeispiel unterscheiden sich gegenüber dem ersten Ausführungsbeispiels im Wesentlichen in einer Anordnung einer schlauchummantelten, rundstrangförmigen Faserpreform 23 auf einem Formwerkzeug 24 Während des Infiltrationsvorgangs in einer zylindrischen Druckkammer 25. Bezüglich der übereinstimmenden Verfahrensschritte und Vorrichtungsteile wird auf die Beschreibung zum ersten Ausführungsbeispiel verwiesen.

Zur Vermeidung von Wiederholungen werden im Folgenden nur die sich unterscheidenden Merkmale und Bauteile beschrieben. Wiederkehrend verwendete Bauteile mit gleicher Funktion haben dieselben Bezugszeichen.

Fig. 11 zeigt ausschnittsweise eine langerstreckte rundstrang-förmige Faserpreform 23, die durch Auflage von Fasern auf einem flexiblen Kernelement 26 gebildet wurde Die Faserpreform 23 ist von dem elastischen Schlauch 3 umgeben, der gemäß Fig. 1 und 2 aufgebracht wurde.

Beide Enden des Schlauches 3 sind auf jeweils ein zylindrisches Unterteil 29, 30 eines zweiteiligen Anschlussstutzens 27, 28 aufgezogen, so dass die Unterteile 29, 30 der Anschlussstutzen 27, 28 in den Schlauch 3 münden und an je einem Ende an die Faserpreform 23 anschließen. Die Unterteile 29, 30 des zweiteiligen Anschlussstutzens 27, 28 verfügen jeweils über eine zentrisch angeordnete, absperrbare Angussleitung 12 und Steigerleitung 13.

Mittels jeweils eines identischen Oberteils 31 der Anschlussstutzen 27, 28 in Form einer Schlauchklemme 31 werden die Schlauchenden dicht auf den zylindrischen Unterteilen 29, 30 des Anschlussstutzens 27, 28 verspannt.

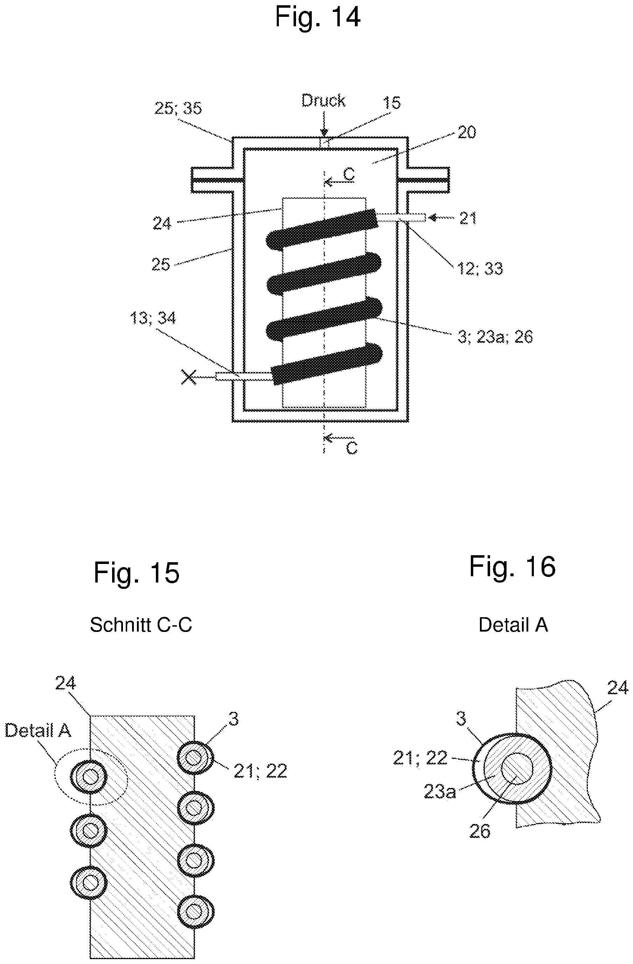

Die schlauchummantelte, rundstrangförmige Faserpreform 23, 3 wird anschließend auf den zylindrischen Formkern 24 gemäß der Fig. 12 gewickelt. Der Formkern 24 hat bevorzugt eine spiralförmig verlaufende Nut 32 (sichtbar in Fig. 15), damit die Form der gewickelten Faserpreform 23 optimal an die Endform einer Spiralfeder angepasst ist.

Der Formkern 24 mit der gewickelten schlauchummantelte Faserpreform 23, 3 wird anschließend in die zylindrische Druckkammer 25 nach Fig. 13 verbracht. Die Angussleitung 12 und die Steigerleitung 13 werden an verlängernde Zuleitungen 33, 34 angeschlossen, die die zylindrische Druckkammer 25 durchdringen und dicht mit dem Gehäuse der Druckkammer 25 verbunden sind. Die auf dem Formkern 24 geformte, schlauchummantelte Faserpreform 23, 3 ist damit druckdicht gegenüber der zylindrischen Druckkammer 25 angeordnet. Die Druckkammer 25 ist mittels eines Deckels 35 dicht verschließbar, der über die absperrbare bzw. mit Druck beaufschlagbare Öffnung 15 verfügt. Der Druckraum 20 der Druckkammer 25 ist mit Luft als Druckmedium gefüllt. Damit ist ein äußeres, druckdicht geschlossenes System zwischen dem Schlauch 3 der schlauchummantelten Faserpreform 23, 3 und der Druckkammer 25 erzeugt.

Fig. 13 zeigt die Anordnung der schlauchummantelten, rund-strangförmigen Faserpreform 23, 3 in der zylindrischen Druckkammer 25 während einer ersten Infiltrationsphase, bei der die gewickelte Faserpreform 23 evakuiert wird. Dazu ist die an-gussseitige Zuleitung 33 abgesperrt und an der steigerseitigen Zuleitung 34 ist eine nicht dargestellte Vakuumpumpe betrieben, wodurch in dem Schlauch 3 ein inneres, druckdicht geschlossenes System mit einem Vakuum geschaffen ist.

Die Druckverhältnisse im inneren und äußeren Drucksystem werden gemäß dem ersten Ausführungsbeispiel nach Fig. 4 eingestellt.

Bei der Evakuierung wird der Schlauch 3 an die rundstrangförmige Faserpreform 23 angedrückt und sämtliche Lufteinschlüsse aus der pelmeablen Struktur der Faserpreform 23 entfernt.

In einer zweiten Infiltrationsphase nach Fig. 14 wird die steigerseitige Zuleitung 34 verschlossen und über die angussseitige Zuleitung 33 das flüssige Harzsystem mit Überdruck gegenüber dem Vakuum und dem Druck in der Druckkammer 25 in das innere, druckdichte System zwischen Schlauch 3 und Faserpreform 23 gegeben.

Die Druckkammer'25 wird über die Öffnung 15 ebenfalls mit einem Druck beaufschlagt, so dass durch eine eingestellte Druckdifferenz zwischen dem Druck im Druckbehälter 25 des äußeren druckdicht geschlossenen Systems und dem Druck des Matrixmaterials 21 im Spaltraum 22 des inneren, druckdicht geschlossenen System die Weitung des Schlauches 3 und damit die Größe des Spaltraumes 22 reguliert werden kann.

Durch den Überdruck im inneren Drucksystem wird der elastische Schlauch 3 in einem nicht am Formkern 24 anliegenden Bereich radial aufgeweitet und ein• bogenförmiger, längs der spiralförmig geformten Faserpreform 23 erstreckter Spaltraum 22 erzeugt, der sich über die gesamte Länge der Faserpreform 23 mit Matrixmaterial 21 füllt. Dieser Vorgang ist gut ersichtlich aus Fig. 15, die den Formkern 24 mit der gewickelten Faserpreform 23 während der Infiltrationsphase nach Fig. 14 in einer etwas vergrößerten Detailschnittansicht C-C zeigt. In einer Detailansicht B in Fig. 16 ist ein stark vergrößerter Ausschnitt des belegten Formkerns 24 nach Fig. 15 dargestellt, aus welcher der im Querschnitt bogenförmige, mit Matrixmaterial 21 gefüllten Spaltraum 22 zwischen der Faserpreform 23 und dem elastischen Schlauch 3 gut ersichtlich ist.

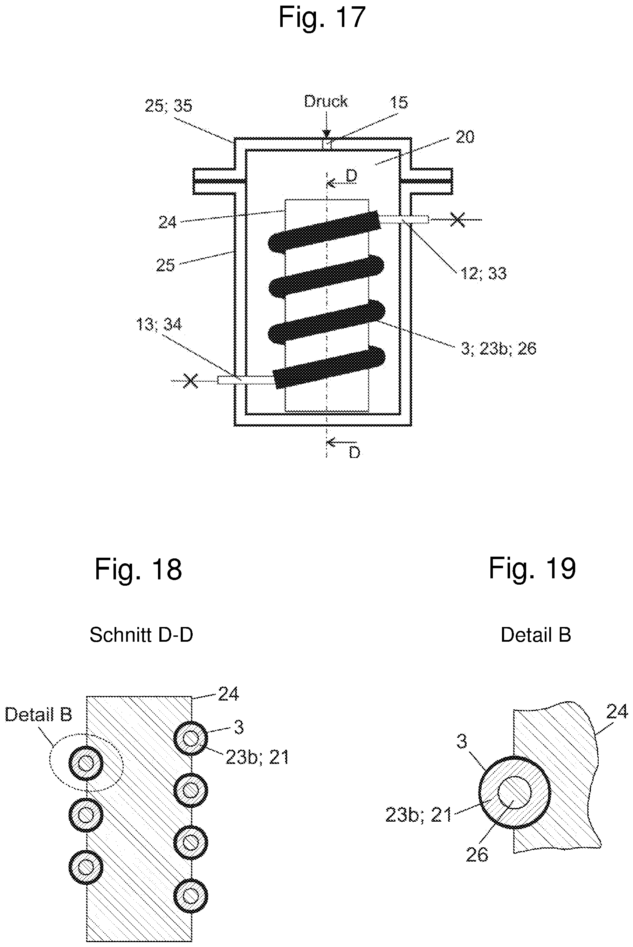

In einer dritten Infiltrationsphase nach Fig. 17 werden beide Zuleitungen 33, 34 geschlossen. Ein Überdruck in der zylindrischen Druckkammer 25 gegenüber dem Druck im Spaltraum 22, beaufschlagt über die Öffnung 15 im Deckel 35 der Druckkammer 25, sorgt anschließend für eine radial gerichteten Verengung des Schlauches 3 bis dieser über die gesamte Länge der Faserpreform 23 an der spiralförmig geformten. Faserpreform 23 anliegt, wie aus der Querschnittsdarstellung in Fig. 18 (Schnitt D-D) und der Detailansicht C in Fig. 19 ersichtlich ist. Beim Anpressen des Schlauches 3 wird die spiralförmig geformte Faserpreform 23 gleichmäßig über die gesamte Länge und radial zu ihrer Mitte gerichtet mit Matrixmaterial 21 getränkt.

Nach der Infiltration wird die getränkte Faserpreform 23 mit dem Formwerkzeug 24 aus der Druckkammer 25 entnommen und zur Konsolidierung in einen nicht dargestellten Wärmeofen verbracht. Nach dem Aushärten wird die fertiggestellte Feder aus Faserverbundmaterial vom Formkern 24 entformt.

Die zylindrische Druckkammer 25 wie auch der Formkern 24 haben während der Infiltration und Aushärtung keinerlei Kontakt zum flüssigen Harzsystem. Sie stehen verschmutzungsfrei sofort für den folgenden Umform- und Infiltrationsvorgang zur Verfügung.

Der Schlauch 3 kann je nach Einsatzfall als Schutzhülle auf der fertiggestellten Feder verbleiben oder aber auch entfernt werden. Ebenso kann das flexible Kernelement 26 entfernt werden, wobei eine Hohlfeder gebildet ist.

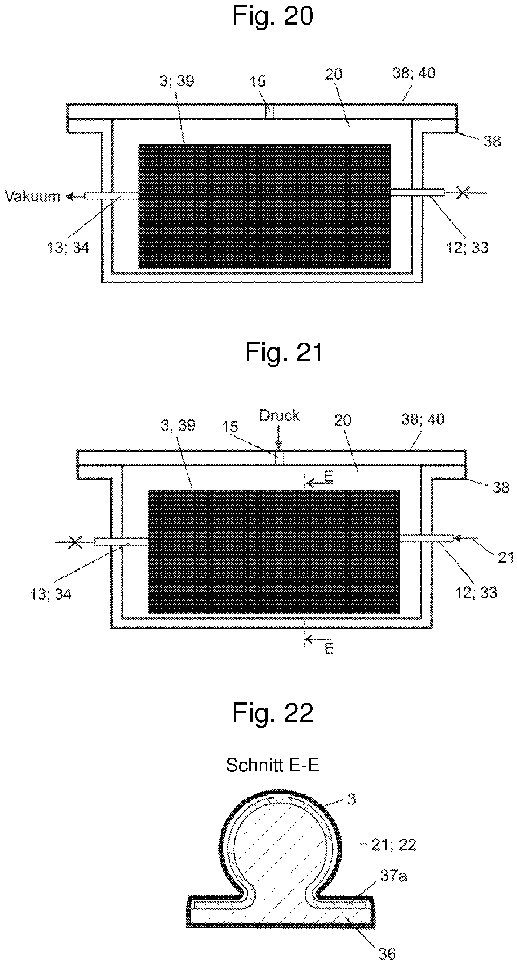

Ein drittes Ausführungsbeispiel gemäß den Figuren 20 bis 24 beschreibt das erfindungsgemäße Verfahren und die zugehörigen Vorrichtungen, bei dem im Unterschied zum zweiten Ausführungsbeispiel eine auf einem Omegaprofil-förmigen Formkern 36 angeordnete, entsprechend geformte Faserpreform 37 in einem Druckbehälter 38 zur Herstellung eines Omega-Profilkörpers aus Faserverbundwerkstoff infiltriert wird.
Zur Vermeidung von Wiederholungen werden im Folgenden nur die sich unterscheidenden Merkmale und Bauteile beschrieben. Bezüglich der übereinstimmenden Verfahrensschritte und Vorrichtungsteile wird auf die Beschreibung zum ersten und zweiten Ausführungsbeispiel verwiesen. Wiederkehrend verwendete Bauteile mit gleicher Funktion haben dieselben Bezugszeichen.

Der Omegaprofil-förmige Formkern 36 wird zunächst in einem nicht dargestellten Vorgang mit einer trockenen, plattenförmigen Faserpreform belegt.

Auf den Formkern 36 und die Faserpreform 37 wird ein elastischer Schlauch 3 analog des gem. Fig. 1 und 2 beschriebenen Aufbringvorgangs aufgezogen. Der Schlauch 3 umfasst im Gegensatz zu den vorbeschriebenen Ausführungsbeispielen sowohl die Faserpreform 37 als auch den Formkern 36. Dementsprechend wird der Schlauch 3 so aufgeweitet, dass er Faserpreform 37 und Formkern 36 aufnehmen kann.

Nach dem Aufbringen des Schlauches 3 auf die Omegaprofil-förmige Faserpreform 37 mit dem Formkern 36 wird die schlauch- ummantelte Faserpreform-Formkern-Einheit 39 in einer großen, quaderförmigen Druckkammer 38, hier Druckbehälter 38 genannt gemäß Fig. 20 angeordnet, die eine absperrbare bzw. druckbeaufschlagbare Öffnung 15 im Deckel 40 aufweist. Die schlauchummantelte Faserpreform-Formkern-Einheit 39 ist unter Bildung eines inneren und äußeren, druckdicht verschlossenen Systems analog der Anordnung nach Fig. 13 mit den angussseitigen und steigerseitigen Zuleitungen 33, 34 verbunden.

Fig. 20 zeigt die Anordnung der den schlauchförmigen, elastischen Überzug 3 aufweisenden, Omegaprofil-förmige Faserpreform 37 in dem Druckbehälter 38 während der ersten Infiltrations-phase zur Evakuierung der angeformten Faserpreform 37. Dazu ist die angussseitige Zuleitung 33 abgesperrt und über die steigerseitige Zuleitung 34 wird ein Vakuum innerhalb des Schlauches 3 erzeugt.

Die Druckverhältnisse im inneren und äußeren Drucksystem entsprechen denen im ersten Ausführungsbeispiel nach Fig. 4 bzw. im zweiten Ausführungsbeispiel nach Fig. 13. Die Öffnung 15 im Deckel 40 des Druckbehälters 38 ist während dieses Verfahrensschritts entweder offen oder zur Unterstützung der Evakuierung mit einem bestimmten höheren Druck als dem Umgebungsdruck beaufschlagt.

Bei der Evakuierung der Faserpreform 37 wird der Schlauch 3 an die Faserpreform 37 und gemeinsam mit der Faserpreform 37 fest an den Omegaprofil-förmige Formkern 36 angedrückt, so dass einerseits die Formgebung der Faserpreform 37 unterstützt wird und andererseits sämtliche Lufteinschlüsse aus der permeablen Struktur der Faserpreform 37 entfernt werden.

Nach dem Evakuieren der Faserpreform 37 wird in der zweiten Infiltrationsphase nach Fig. 21 die steigerseitige Zuleitung 3.4 verschlossen und über die angussseitige Zuleitung 33 das flüssige Harzsystem mit Überdruck gegenüber dem Vakuum und dem Druck in der Druckkammer in das innere, druckdichte System innerhalb des Schlauchs 3 gegeben.

Die Druckverhältnisse im inneren und äußeren Drucksystem während der zweiten Infiltrationsphase werden 'gemäß dem zweiten Ausführungsbeispiel nach Fig. 14 eingestellt und reguliert.

Durch den Überdruck im inneren Drucksystem wird der elastische Schlauch 3 in einem nicht am Formkern 36 anliegenden Bereich radial aufgeweitet, wodurch ein gleichförmiger, der Form der Faserpreform 37 folgender, längs der Faserpreform 37 erstreckter Spaltraum 22 generiert wird, welcher über die gesamte Länge der Faserpreform 37 mit Matrixmaterial 21 gefüllt wird. Dieser Vorgang ist näher aus Fig. 22 ersichtlich, die die schlauchummantelte Faserpreform-Formkern-Einheit39 während der zweiten Infiltrationsphase nach Fig. 21 in einer vergrößerten Detailschnittansicht E-E zeigt.

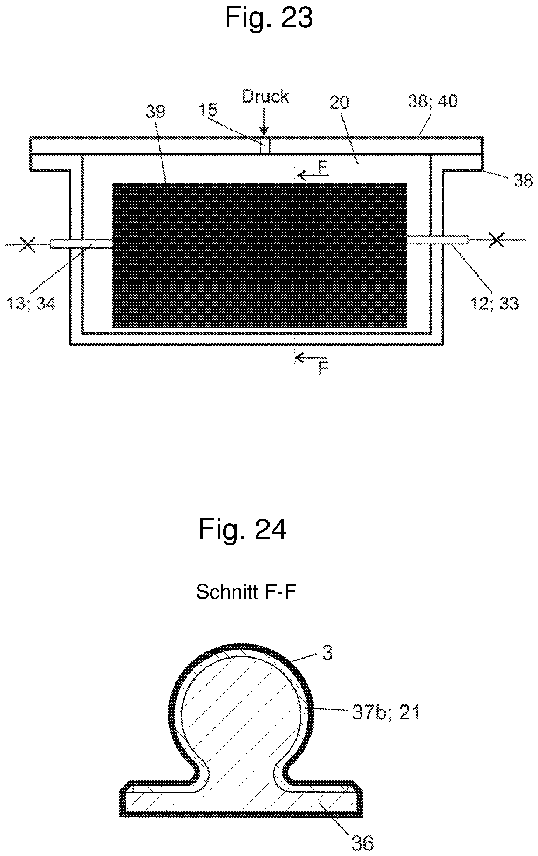

In einer dritten Infiltrationsphase nach Fig. 23 werden beide Zuleitungen 33, 34 geschlossen. Ein über die Öffnung 15 im Deckel 35 des Druckbehälters 38 beaufschlagter Überdruck sorgt anschließend für eine radial gerichteten Verengung des Schlauches 3 bis dieser über die gesamte Länge der Faserpreform-Formkern-Einheit 39 an dieser anliegt und die geformte Faserpreform 37' gleichmäßig über die gesamte Länge und radial zu ihrer Mitte gerichtet mit Matrixmaterial 21 getränkt wird. Der Zustand der schlauchummantelten Faserpreform-Formkern-Einheit 39 während der dritten Infiltrationsphase ist aus der Querschnittsdarstellung in Fig. 24 (Schnitt F-F) ersichtlich.

Noch im Druckbehälter 38 befindlich wird das Matrixmaterial 21 der getränkten Faserpreform 37 konsolidiert. Nach dem Aushärten wird die Faserpreform-Formkern-Einheit 39 aus dem drucklos gestellten Druckbehälter 38 entnommen, der Schlauch 3 entfernt. und der fertiggestellte Omega-Profilkörper aus Faserverbundmaterial vom Formkern 36 entformt (nicht dargestellt).

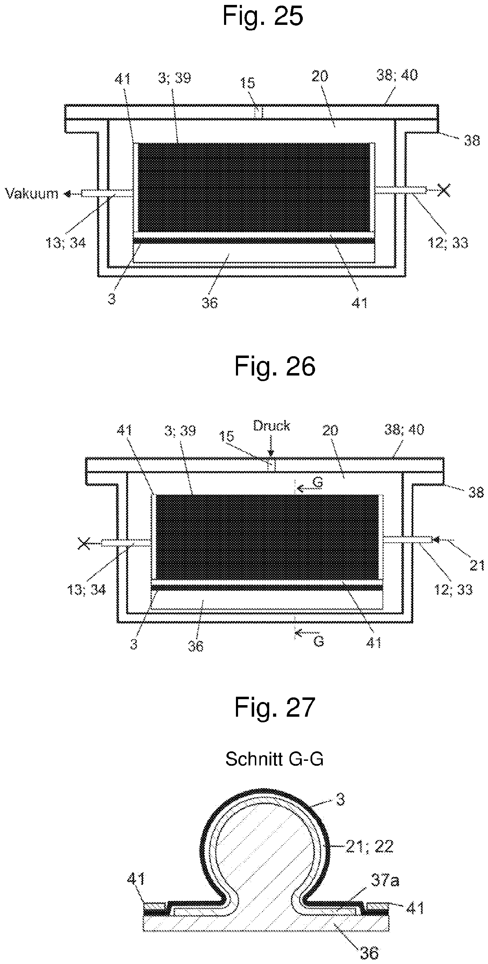

Ein viertes Ausführungsbeispiel gemäß den Figuren 25 bis 29 beschreibt das erfindungsgemäße Verfahren und die zugehörigen Vorrichtungen zur Infiltration der auf dem Omegaprofil-förmigen Formkern 36 angeordneten Faserpreform 37 mittels eines elastischen Überzugs 3, der an den Formkern 36 anschließt.

Zur Vermeidung von Wiederholungen werden im Folgenden nur die 15 sich gegenüber dem dritten Ausführungsbeispiel unterscheidenden Merkmale und Bauteile beschrieben. Bezüglich der übereinstimmenden Verfahrensschritte und Vorrichtungsteile wird auf die Beschreibung der vorhergehenden Ausführungsbeispiele verwiesen. Wiederkehrend verwendete Bauteile mit gleicher Funktion haben dieselben Bezugszeichen.

Auf den Formkern 36 mit der angeformten, trockenen Faserpreform 37 wird ein flächiger, elastischer Überzug 3, aus beispielsweise Silikon aufgelegt. Die Fläche des elastischen Überzugs 3 entspricht der Oberfläche des Formkerns 36 bzw. der Faserpreform 37 und braucht nicht aufgeweitet zu werden. Der elastische Überzug 3 überdeckt die Faserpreform 37 und schließt im Unterschied zum vorbeschriebenen Ausführungsbeispiel direkt an den Formkern 36 an. Die Ränder des elastischen
Überzugs 3 liegen flächig an dem nicht von der Faserpreform 37 überdeckten Randbereich des-Formkerns 36 an und werden mit Spannleisten 41 druckdicht am Formkern 36 fixiert.

Nach dem Aufbringen des elastischen Überzugs 3 auf die Omega-profilförmige Faserpreform 37 wird die, mit dem Überzug 3 versehene Faserpreform-Formkern-Einheit 39 indem Druckbehälter 38 gemäß Fig. 25 angeordnet.

Die mit dem Überzug 3 versehene Faserpreform-Formkern-Einheit 39 ist unter Bildung eines inneren und äußeren, druckdicht verschlossenen Systems analog der Anordnung nach Fig. 20 mit den angussseitigen und steigerseitigen Zuleitungen 33, 34 verbunden.

Fig. 25 zeigt die Anordnung der den elastischen Überzug 3 aufweisenden, Omegaprofilförmige Faserpreform 37 in dem Druckbehälter 38 während der ersten Infiltrationsphase zur Evakuierung der angeformten Faserpreform 37.
Die Vorgänge und Druckverhältnisse im inneren und äußeren Drucksystem während der Evakuierung entsprechen denen, wie im dritten Ausführungsbeispiel nach Fig. 20 beschreiben.

Nach dem Evakuieren der Faserpreform 37 erfolgt die zweite Infiltrationsphase im Druckbehälter 38 gemäß Fig. 26. Der Vorgang der Spaltbildung zwischen der Faserpreform 37 und dem elastischen Überzug 3 sowie des Einströmens des Matrixmaterials 21 in den Spaltraum 22 erfolgt analog dem beschriebenen Vorgang während der zweiten Infiltrationsphase nach dem dritten Ausführungsbeispiel. Die Druckverhältnisse im inneren und äußeren Drucksystem während der zweiten Infiltrationsphase werden gemäß dem zweiten Ausführungsbeispiel nach Fig. 14 bzw. gemäß dem dritten Ausführungsbeispiel nach Fig. 21 eingestellt und reguliert.

Fig. 27 Zeigt die mit dem Überzug 3 versehene Faserpreform-Formkern-Einheit 39 während der zweiten Infiltrationsphase. nach Fig. 26 in einer vergrößerten Detailschnittansicht G-G.

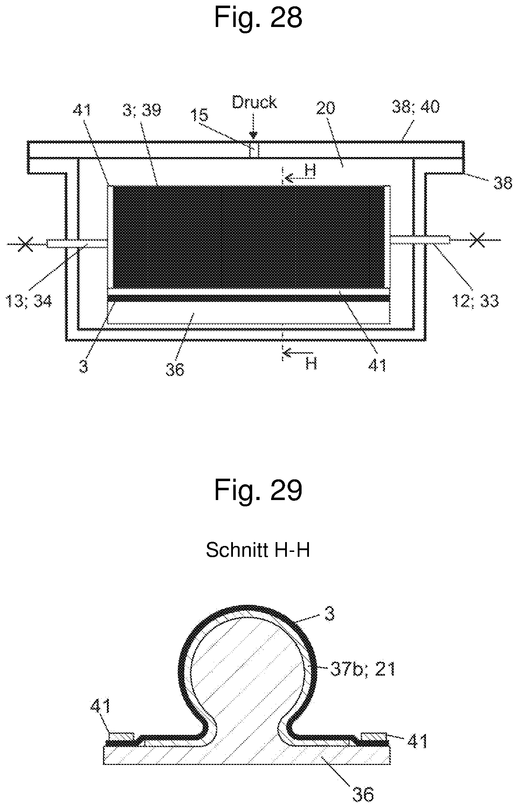

In der dritten Infiltrationsphase nach Fig. 28 erfolgt die druckbeaufschlagte Verengung des Überzugs und Tränkung der Faserpreform analog dem beschriebenen Vorgang während der dritten Infiltrationsphase nach dem dritten Ausführungsbeispiel.

Der Zustand der mit, einem Überzug versehenen Faserpreform-Formkern-Einheit 39 während der dritten Infiltrationsphase ist aus der Querschnittsdarstellung in Fig. 29 (Schnitt H-H) ersichtlich.

Die Konsolidierung des Matrixmaterials 21 der getränkten Faserpreform 37 erfolgt in der Druckkammer 38. Nach dem Aushärten wird die Faserpreform-Formkern7Einheit 39 aus dem Druckbehälter 38 entnommen, die Spannleisten 41 und der Überzug 3 entfernt und der fertiggestellte Omega-Profilkörper aus Faserverbundmaterial vom Formkern 36 entformt (nicht dargestellt).

### Bezugszeichenliste

- 1: rundstangenförmige Faserpreform, a trocken, b getränkt
- 2: formstabiles Kernelement
- 3: elastischer Überzug, schlauchförmiger, elastischer Überzug, elastischer Schlauch
- 4: Aufnahmeeinrichtung
- 5: Hilfskörper, hdhlprofilartig, rohrförmig.
- 6: Aufnahmekonus
- 7: Schlauchschelle
- 8: angussseitiger Anschlussstutzen, dreiteilig
- 9: steigerseitiger Anschlussstutzen, dreiteilig
- 10: konisches Unterteil des Anschlussstutzens
- 11: konisches Unterteil des Anschlussstutzens
- 12: Angussleitung
- 13: Steigerleitung
- 14: rohrförmige Druckkammer
- 15: absperrbare Öffnung der Druckkammer
- 16: konisches Oberteil des Anschlussstutzens
- 17: konisches Oberteil des Anschlussstutzens
- 18: Verspannteil des Anschlussstutzens
- 19: Verspannteil des Anschlussstutzens
- 20: Druckraum
- 21: Matrixmaterial
- 22: Spaltraum
- 23: rundstrangförmige Faserpreform, a trocken, b getränkt
- 24: Formwerkzeug, zylindrischer Formkern
- 25: zylindrische Druckkammer
- 26: flexibles Kernelement
- 27: angussseitiger Anschlussstutzen, zweiteilig
- 28: steigerseitiger Anschlussstutzen, zweiteilig
- 29: zylindrisches Unterteil des Anschlussstutzens
- 30: zylindrisches Unterteil des Anschlussstutzens
- 31: Oberteil des Anschlussstutzens, Schlauchklemme
- 32: spiralförmige Nut
- 33: angussseitige Zuleitung
- 34: steigerseitige Zuleitung
- 35: Deckel der Druckkammer
- 36: Formwerkzeug, Omegaprofil-förmiger Formkern
- 37: Omegaprofil-förmige Faserpreform, a trocken, b getränkt
- 38: große Druckkammer, Druckbehälter
- 39: Faserpreform-Formkern-Einheit mit Überzug / Schlauch
- 40: Deckel des Druckbehälters
- 41: Spannleiste

## Patentansprüche

1. Verfahren zur Infiltration einer Faserpreform eines Bauteils aus Faserverbundwerkstoff mit einem Matrixmaterial (21), wobei
- auf die Faserpreform (1, 23, 37) ein elastischer Überzug (3) aufgebracht wird,
- der elastische Überzug (3) unter Bildung eines Spaltraums (22) zwischen der Faserpreform (1) und dem Überzug (3) mittels mit dem elastischen Überzug in Wirkverbindung stehender Mittel aufgeweitet wird,
- das Matrixmaterial (21) in den Spaltraum (22) zugeführt wird und
- anschließend der elastische Überzug (3) an die Faserpreform (1, 23,-37) angepresst wird.

2. Verfahren nach Anspruch 1, **dadurch gekennzeichnet, dass** ein schlauchförmiger elastischer Überzug verwendet wird.

3. Verfahren nach Anspruch 2, **dadurch gekennzeichnet, dass** der elastische Schlauch (3) derart auf die Faserpreform (1) aufgebracht, wird, dass der elastische Schlauch (3) auf einen hohlprofilartigen Hilfskörper (5) aufgezogen wird, die Faserpreform (1) in einen lichten Querschnitt des Hilfskörpers (5) eingeführt wird, ein Schlauchende an der Faserpreform (1) fixiert wird und der Hilfskörper (5) zwischen der Faserpreform (1) und dem Schlauch (3) herausgezogen wird.

4. Verfahren nach einem der Ansprüche 1 bis 3, **dadurch gekennzeichnet, dass** zwischen der Faserpreform (1, 23, 37) und dem Überzug (3) ein inneres, druckdicht geschlossenes System erzeugt wird.

5. Verfahren nach Anspruch 4, **dadurch gekennzeichnet, dass** vor der Zuführung von Matrixmaterial (21) in den Spaltraum (22) die Faserpreform (1, 23, 37), mittels des inneren druckdichten Systems evakuiert wird.

6. Verfahren nach einem der Ansprüche 1 bis 4, **dadurch gekennzeichnet, dass** zwischen einer Druckkammer (14, 25, 38) und dem Überzug (3) ein äußeres, druckdicht geschlossenes System erzeugt wird.

7. Verfahren nach einem der vorstehenden Ansprüche, **dadurch gekennzeichnet, dass** der Spaltraum (22) zwischen der Faserpreform (1, 23, 37) und dem Überzug (3) derart gebildet wird, dass ein Überdruck im inneren, druckdicht geschlossenen System gegenüber dem Druck im äußeren druckdichten System eingestellt wird.

8. Verfahren nach einem der vorstehenden Ansprüche, **dadurch gekennzeichnet, dass** der elastische Überzug (3) dadurch an die Faserpreform (1) angepresst wird, dass ein Überdruck im äußeren, druckdicht geschlossenen System gegenüber dem Druck im inneren, druckdicht geschlossenen System eingestellt wird.

9. Verfahren nach einem der Ansprüche 2 bis 8, **dadurch gekennzeichnet, dass** die den Überzug (3) aufweisende, vorzugsweise mit dem Schlauch (3) ummantelte Faserpreform (23, 3) vor dem Aufweiten des Überzugs (3) auf 'einem Formwerkzeug (24) angeordnet wird.

10. Verfahren nach einem der Ansprüche 2 bis 8, **dadurch gekennzeichnet, dass** die Faserpreform (37) vor dem Aufbringen des elastischen Überzuges (3), vorzugsweise vor dem Aufbringen des Schlauches (3), auf einem Formwerkzeug (36) angeordnet wird.

11. Verfahren nach Anspruch 10, **dadurch gekennzeichnet, dass** der an das Formwerkzeug (36) anschließende Überzug (3) druckdicht mit dem Formwerkzeug (36) verbunden wird.

12. Vorrichtung zur Infiltration einer Faserpreform eines Bauteils aus Faserverbundwerkstoff mit einem Matrixmaterial, wobei auf der Faserpreform (1, 23, 37) ein elastischer Überzug (3) angeordnet ist und mit dem elastischen Überzug (3) in Wirkverbindung stehende Mittel vorgesehen sind, mittels welcher der Überzug (3) unter Bildung eines Spaltraums (22) zwischen der Faserpreform (1, 23, 37) und dem Überzug (3) aufweitbar ist, ein Matrixmaterial (21) in den Spaltraum (22) zuführbar ist und der Überzug (3) an die Faserpreform (1, 23, 37) anpressbar ist.

13. Vorrichtung nach Anspruch 12, **dadurch gekennzeichnet, dass** die Faserpreform (1, 23, 37) mittels einer Aufnahmeeinrichtung (4) in einem schlauchförmigen, elastischen Überzug (3) angeordnet ist.

14. Vorrichtung nach Anspruch 13, **dadurch gekennzeichnet, dass** die Aufnahmeeinrichtung (4) einen hohlprofilartigen Hilfskörper (5), mit vorzugsweise einem Aufnahmekonus (6), aufweist.

15. Vorrichtung nach einem der Ansprüche 12 bis 14, **dadurch gekennzeichnet, dass** die Mittel zumindest zwei Anschlussstutzen (8, 9, 27, 28) mit jeweils einer absperrbaren Leitung (12, 13) aufweisen, wobei die Anschlussstutzen (8, 9, 27, 28) mit dem Überzug (3) druckdicht verbunden sind und die Leitungen (12, 13) in den Überzug (3) münden.

16. Vorrichtung nach einem der Ansprüche 12 bis 15, **dadurch gekennzeichnet, dass** die Mittel eine Druckkammer (14, 25, 38) aufweisen, in der die den Überzug (3) aufweisende Faserpreform (1, 23, 37, 3) druckdicht angeordnet ist.

17. Vorrichtung nach einem der Ansprüche 15 bis 16, **dadurch gekennzeichnet, dass** die Anschlussstutzen (8, 9) druckdicht mit der Druckkammer (14) verbunden sind.

18. Vorrichtung nach einem der Ansprüche 16 bis 17, **dadurch gekennzeichnet, dass** die Druckkammer. (14, 25, 38) eine absperrbare Öffnung (15) aufweist.

19. Vorrichtung nach einem der Ansprüche 16 bis 18, **dadurch gekennzeichnet, dass** in einem Druckraum (20) der Druckkammer (14, 25, 38) Wasser oder Öl, enthalten ist.

20. Vorrichtung nach einem der Ansprüche 12 bis 16, **dadurch gekennzeichnet, dass** die den Überzug (3) aufweisende, vorzugsweise mit dem Schlauch (3) ummantelte Faserpreform (23, 37, 3) auf einem Formwerkzeug (24, 36) angeordnet ist.

21. Vorrichtung nach Anspruch 20, **dadurch gekennzeichnet, dass** der an das Formwerkzeug (36) anschließende Überzug (3) druckdicht mit dem Formwerkzeug (36) verbunden ist.

22. Vorrichtung nach einem der Ansprüche 12 bis 16, **dadurch gekennzeichnet, dass** die Faserpreform (37) mit dem Formwerkzeug (36) in dem elastischen Schlauch (3) angeordnet ist.

## Claims

1. Method for infiltrating a fibre preform of a component made from fibre composite material with a matrix material (21), wherein
- an elastic cover (3) is applied to the fibre preform (1, 23, 37),
- the elastic cover (3) is widened to form a gap space (22) between the fibre preform (1) and the cover (3) via means operatively connected to the elastic cover,
- the matrix material (21) is fed into the gap space (22) and
- then the elastic cover (3) is pressed against the fibre preform (1, 23, 37).

2. Method according to Claim 1, **characterized in that** a tubular elastic cover is used.

3. Method according to Claim 2, **characterized in that** the elastic tube (3) is applied to the fibre preform (1) in such a way that the elastic tube (3) is pulled onto an auxiliary body (5) which is in the form of a hollow profile, the fibre preform (1) is inserted into a clear cross section of the auxiliary body (5), one tube end is fixed to the fibre preform (1) and the auxiliary body (5) between the fibre preform (1) and the tube (3) is pulled out.

4. Method according to one of Claims 1 to 3, **characterized in that** an inner system which is closed in a pressure-tight manner is created between the fibre preform (1, 23, 37) and the cover (3).

5. Method according to Claim 4, **characterized in that**, before matrix material (21) is fed into the gap space (22), the fibre preform (1, 23, 37) is evacuated by means of the inner pressure-tight system.

6. Method according to one of Claims 1 to 4, **characterized in that** an outer system which is closed in a pressure-tight manner is created between a pressure chamber (14, 25, 38) and the cover (3).

7. Method according to one of the preceding claims, **characterized in that** the gap space (22) between the fibre preform (1, 23, 37) and the cover (3) is formed in such a way that an excess pressure in the inner system which is closed in a pressure-tight manner is set with respect to the pressure in the outer pressure-tight system.

8. Method according to one of the preceding claims, **characterized in that** the elastic cover (3) is pressed against the fibre preform (1) by virtue of the fact that an excess pressure in the outer system which is closed in a pressure-tight manner is set with respect to the pressure in the inner system which is closed in a pressure-tight manner.

9. Method according to one of Claims 2 to 8, **characterized in that**, before the cover (3) is widened, the fibre preform (23, 3) comprising the cover (3) and preferably enclosed by the tube (3) is arranged on a moulding tool (24).

10. Method according to one of Claims 2 to 8, **characterized in that**, before the elastic cover (3) is applied, preferably before the tube (3) is applied, the fibre preform (37) is arranged on a moulding tool (36).

11. Method according to Claim 10, **characterized in that** the cover (3) adjoining the moulding tool (36) is connected in a pressure-tight manner to the moulding tool (36).

12. Device for infiltrating a fibre preform of a component made from fibre composite material with a matrix material, wherein an elastic cover (3) is arranged on the fibre preform (1, 23, 37) and means operatively connected to the elastic cover (3) are provided, via which the cover (3) can be widened to form a gap space (22) between the fibre preform (1, 23, 37) and the cover (3), a matrix material (21) can be fed into the gap space (22) and the cover (3) can be pressed against the fibre preform (1, 23, 37) .

13. Device according to Claim 12, **characterized in that** the fibre preform (1, 23, 37) is arranged in a tubular elastic cover (3) by means of a receiving apparatus (4).

14. Device according to Claim 13, **characterized in that** the receiving apparatus (4) comprises an auxiliary body (5) which is in the form of a hollow profile with preferably a receiving cone (6).

15. Device according to one of Claims 12 to 14, **characterized in that** the means comprise at least two connection pieces (8, 9, 27, 28), each with a line (12, 13) which can be shut off, wherein the connection pieces (8, 9, 27, 28) are connected in a pressure-tight manner to the cover (3) and the lines (12, 13) open out into the cover (3).

16. Device according to one of Claims 12 to 15, **characterized in that** the means comprise a pressure chamber (14, 25, 38) in which the fibre preform (1, 23, 37, 3) comprising the cover (3) is arranged in a pressure-tight manner.

17. Device according to one of Claims 15 to 16, **characterized in that** the connection pieces (8, 9) are connected in a pressure-tight manner to the pressure chamber (14).

18. Device according to one of Claims 16 to 17, **characterized in that** the pressure chamber (14, 25, 38) comprises an opening (15) which can be shut off.

19. Device according to one of Claims 16 to 18, **characterized in that** water or oil is contained in a pressure space (20) of the pressure chamber (14, 25, 38).

20. Device according to one of Claims 12 to 16, **characterized in that** the fibre preform (23, 37, 3) comprising the cover (3) and preferably enclosed by the tube (3) is arranged on a moulding tool (24, 36) .

21. Device according to Claim 20, **characterized in that** the cover (3) adjoining the moulding tool (36) is connected in a pressure-tight manner to the moulding tool (36).

22. Device according to one of Claims 12 to 16, **characterized in that** the fibre preform (37) is arranged with the moulding tool (36) in the elastic tube (3).

## Revendications

1. Procédé pour l'infiltration d'une ébauche de fibres d'un composant constitué d'un matériau composite renforcé par des fibres avec un matériau de matrice (21), dans lequel
- un revêtement élastique (3) est appliqué sur l'ébauche de fibres (1, 23, 37),
- le revêtement élastique (3) est élargi en formant un espace interstitiel (22) entre l'ébauche de fibres (1) et le revêtement (3) à l'aide d'un moyen en liaison fonctionnelle avec le revêtement élastique,
- le matériau de matrice (21) est introduit dans l'espace interstitiel (22) et
- le revêtement élastique (3) est ensuite pressé contre l'ébauche de fibres (1, 23, 37).

2. Procédé selon la revendication 1, **caractérisé en ce qu'**un revêtement élastique en forme de tuyau est utilisé.

3. Procédé selon la revendication 2, **caractérisé en ce que** le tuyau élastique (3) est appliqué sur l'ébauche de fibres (1) de telle sorte que le tuyau élastique (3) soit étiré sur un corps auxiliaire de type profilé creux (5), l'ébauche de fibres (1) est introduite dans une section transversale intérieure du corps auxiliaire (5), une extrémité du tuyau est fixée à l'ébauche de fibres (1) et le corps auxiliaire (5) entre l'ébauche de fibres (1) et le tuyau (3) est retiré.

4. Procédé selon l'une quelconque des revendications 1 à 3, **caractérisé en ce qu'**un système interne fermé de manière étanche à la pression est créé entre l'ébauche de fibres (1, 23, 37) et le revêtement (3) .

5. Procédé selon la revendication 4, **caractérisé en ce qu'**avant l'introduction du matériau de matrice (21) dans l'espace interstitiel (22), l'ébauche de fibres (1, 23, 37) est mise sous vide au moyen du système interne étanche à la pression.

6. Procédé selon l'une quelconque des revendications 1 à 4, **caractérisé en ce qu'**un système externe fermé de manière étanche à la pression est créé entre une chambre de pression (14, 25, 38) et le revêtement (3) .

7. Procédé selon l'une quelconque des revendications précédentes, **caractérisé en ce que** l'espace interstitiel (22) entre l'ébauche de fibres (1, 23, 37) et le revêtement (3) est formé de telle sorte qu'une surpression s'établisse dans le système interne fermé de manière étanche à la pression par rapport à la pression dans le système externe étanche à la pression.

8. Procédé selon l'une quelconque des revendications précédentes, **caractérisé en ce que** le revêtement élastique (3) est pressé contre l'ébauche de fibres (1) par le fait qu'une surpression est établie dans le système externe fermé de manière étanche à la pression par rapport à la pression dans le système interne fermé de manière étanche à la pression.

9. Procédé selon l'une quelconque des revendications 2 à 8, **caractérisé en ce que** l'ébauche de fibres (23, 3) présentant le revêtement (3), de préférence enveloppée avec le tuyau (3), est disposée sur un outil de formage (24) avant l'élargissement du revêtement (3).

10. Procédé selon l'une quelconque des revendications 2 à 8, **caractérisé en ce que** l'ébauche de fibres (37) est disposée sur un outil de formage (36) avant l'application du revêtement élastique (3), de préférence avant l'application du tuyau (3).

11. Procédé selon la revendication 10, **caractérisé en ce que** le revêtement (3) se raccordant à l'outil de formage (36) est connecté de manière étanche à la pression à l'outil de formage (36).

12. Dispositif pour l'infiltration d'une ébauche de fibres d'un composant constitué d'un matériau composite renforcé par des fibres avec un matériau de matrice, dans lequel un revêtement élastique (3) est disposé sur l'ébauche de fibres (1, 23, 37) et des moyens en liaison fonctionnelle avec le revêtement élastique (3) sont prévus, au moyen desquels le revêtement (3) peut être élargi en formant un espace interstitiel (22) entre l'ébauche de fibres (1, 23, 37) et le revêtement (3), un matériau de matrice (21) peut être introduit dans l'espace interstitiel (22) et le revêtement (3) peut être pressé contre l'ébauche de fibres (1, 23, 37).

13. Dispositif selon la revendication 12, **caractérisé en ce que** l'ébauche de fibres (1, 23, 37) est disposée au moyen d'un dispositif de réception (4) dans un revêtement élastique (3) en forme de tuyau.

14. Dispositif selon la revendication 13, **caractérisé en ce que** le dispositif de réception (4) présente un corps auxiliaire de type profilé creux (5) ayant de préférence un cône de réception (6).

15. Dispositif selon l'une quelconque des revendications 12 à 14, **caractérisé en ce que** les moyens présentent au moins deux tubulures de raccordement (8, 9, 27, 28) ayant chacune une conduite pouvant être fermée (12, 13), les tubulures de raccordement (8, 9, 27, 28) étant connectées de manière étanche à la pression au revêtement (3) et les conduites (12, 13) débouchant dans le revêtement (3) .

16. Dispositif selon l'une quelconque des revendications 12 à 15, **caractérisé en ce que** les moyens présentent une chambre de pression (14, 25, 38) dans laquelle est disposée de manière étanche à la pression l'ébauche de fibres (1, 23, 37, 3) présentant le revêtement (3).

17. Dispositif selon l'une quelconque des revendications 15 et 16, **caractérisé en ce que** les tubulures de raccordement (8, 9) sont connectées de manière étanche à la pression à la chambre de pression (14).

18. Dispositif selon l'une quelconque des revendications 16 et 17, **caractérisé en ce que** la chambre de pression (14, 25, 38) présente une ouverture (15) pouvant être fermée.

19. Dispositif selon l'une quelconque des revendications 16 à 18, **caractérisé en ce que** de l'eau ou de l'huile est contenue dans un espace de pression (20) de la chambre de pression (14, 25, 38) .

20. Dispositif selon l'une quelconque des revendications 12 à 16, **caractérisé en ce que** l'ébauche de fibres (23, 37, 3) présentant le revêtement (3), de préférence enveloppée avec le tuyau (3), est disposée sur un outil de formage (24, 36) .

21. Dispositif selon la revendication 20, **caractérisé en ce que** le revêtement (3) se raccordant à l'outil de formage (36) est connecté de manière étanche à la pression à l'outil de formage (36).

22. Dispositif selon l'une quelconque des revendications 12 à 16, **caractérisé en ce que** l'ébauche de fibres (37) est disposée avec l'outil de formage (36) dans le tuyau élastique (3).
